# EUROPÄISCHE PATENTSCHRIFT

(11) **EP 3 549 219 B1**
(45) Veröffentlichungstag und Bekanntmachung des Hinweises auf die Patenterteilung: **03.08.2022**
(21) Anmeldenummer: 17801460.1
(22) Anmeldetag: 22.11.2017
(51) Int. Cl.: H02G 7/00, A01M 29/32, H01B 17/22

(54) **BEFESTIGUNGSPUNKT FÜR EINE FREILEITUNG**
FASTENING POINT FOR AN OVERHEAD LINE
POINT DE FIXATION POUR UNE LIGNE AÉRIENNE

(30) Priorität: 30.11.2016 DE 102016223791
(43) Veröffentlichungstag der Anmeldung: 09.10.2019
(73) Patentinhaber: Innogy SE, 45128 Essen (DE)
(72) Erfinder: ZANDER, Rolf, 52391 Vettweiß-Froitzheim (DE)
(74) Vertreter: Hohendorf Kierdorf Patentanwälte PartGmbB
(86) Internationale Anmeldenummer: PCT/EP2017/080022
(87) Internationale Veröffentlichungsnummer: WO 2018/099780

(56) Entgegenhaltungen:
- EP-A1- 1 087 487
- DE-A1- 10 335 229
- FR-A- 1 468 170
- US-A- 2 421 286
- US-A- 3 288 918

## Beschreibung

Die vorliegende Erfindung betrifft einen Vogelschutz für eine Freileitung und einen Befestigungspunkt für eine Freileitung eines Energieversorgungsnetzes.

Freileitungen von Energieversorgungsnetzen sind entsprechend den gesetzlichen Vorschriften mit Einrichtungen zum Vogelschutz zu versehen. Hierzu ist es beispielsweise bekannt, an einem Freileitungsmast mit Stützisolator, auf dem ein Leiterseil der Freileitung aufliegt, den Stützisolator und das Leiterseil mit einer Schutzkappe bzw. einer Vogelschutzhaube zu versehen.

Dabei ist nachteilig, dass die Vogelschutzhaube den Selbstreinigungseffekt des Isolators unterbindet, wobei Schmutz und Umgebungsstaub durch Regenfälle von dem Isolator abgewaschen werden. So können sich zwischen dem Stützisolator und der Schutzkappe Umgebungsstaub und Schmutz ablagern und ansammeln. Abhängig von den jeweiligen klimatischen Umgebungsbedingungen kann diese Schmutzschicht leitend werden und einen Erdschluss herbeiführen. Durch den Erdschluss werden der Isolator, das Leiterseil und die Vogelschutzhaube beschädigt oder zerstört.

Weiter können mechanische Befestigungen der Vogelschutzhauben durch Windeinflüsse oder Alterung des Materials versagen, so dass sich die Schutzhauben lösen und herabstürzen können. Einerseits kann dies eine Gefahr für Personen oder den Straßenverkehr bedeuten. Andererseits ist auch der Vogelschutz nicht mehr gewährleistet.

Aus der DE 103 35 229 A1 ist ein Befestigungspunkt nach Oberbegriff von Anspruch 1 bekannt. Weiterer Stand der Technik ist aus den Dokumenten US 2 421 286 A, US 3 288 918 A, EP 1 087 487 A1 und FR 1 468 170 A bekannt.

Ausgehend von dem bekannten Stand der Technik liegt der vorliegenden Erfindung die Aufgabe zugrunde, einen verbesserten Vogelschutz für eine Freileitung sowie einen Befestigungspunkt für eine Freileitung eines Energieversorgungsnetzes anzugeben, welche die voranstehend beschriebenen Nachteile nicht oder zumindest in geringerem Maße aufweisen, und insbesondere einen zuverlässigen, betriebssicheren Vogelschutz ermöglichen und in kostengünstiger und einfacher Weise herstellbar sind.

Die Aufgabe wird durch einen Befestigungspunkt mit den Merkmalen des Anspruchs 1 gelöst. Weitere Ausgestaltungen der Erfindung ergeben sich aus den abhängigen Ansprüchen und der nachstehenden Beschreibung.

Gemäß einem Teilaspekt der Erfindung, der nicht isoliert Schutz beansprucht, ist ein Vogelschutz für eine Freileitung vorgesehen, mit einer ersten Spirale und mit einer zweiten Spirale, wobei die erste Spirale und die zweite Spirale dazu eingerichtet sind, ein Leiterseil der Freileitung zumindest abschnittsweise zu umhüllen und wobei die erste Spirale und die zweite Spirale zumindest teilweise aus einem isolierenden Material hergestellt sind, um das Leiterseil zumindest abschnittsweise gegenüber einer Umgebung zu isolieren.

Die Spiralen ermöglichen eine Isolierung des Leiterseils gegenüber der Umgebung, ohne einen dem Leiterseil zugeordneten Stützisolator abzudecken oder zu umhüllen. Auf diese Weise wird verhindert, dass der Selbstreinigungseffekt eines Stützisolators durch den Vogelschutz eingeschränkt wird.

Eine Spirale kann bandförmig oder seilförmig ausgestaltet sein und das Leiterseil umschlingen bzw. um das Leiterseil gewickelt sein.

Eine Spirale kann sich beispielsweise nach Art einer Wicklung umfangsseitig an eine äußere Mantelfläche des Leiterseils anschmiegen und das Leiterseil auf diese Weise enganliegend umhüllen.

Zwischen den Spiralen und dem Leiterseil kann eine kraftschlüssige Verbindung gebildet sein, so dass auf eine zusätzliche, mechanische Befestigung des Vogelschutzes verzichtet werden kann. Es besteht daher keine Gefahr des Herabstürzens des Vogelschutzes aufgrund eines Versagens mechanischer Befestigungsmittel, wie Schrauben, Muttern, Schellen oder dergleichen.

Die erste Spirale und die zweite Spirale können dazu eingerichtet sein, sich zu einer rohr- oder schlauchförmigen Hülle zu ergänzen, die das Leiterseil umschließt. So können die Spiralen zumindest abschnittsweise eine gegenüber der Umgebung lückenlose Umhüllung bzw. Isolierung des Leiterseils darstellen.

Mithilfe des Vogelschutzes können konventionelle Vogelschutzkappen einfach und kostengünstig ersetzt werden.

Nach der Ausgestaltung des Vogelschutzes ist vorgesehen, dass die erste Spirale und/oder die zweite Spirale eine Befestigungsspirale zur Befestigung des Leiterseils an einem Stützisolator ist. Demnach kann es sich bei dem Vogelschutz um eine Kombination aus Vogelschutz und Befestigungsspirale handeln, die beispielsweise eine Zugentlastung für das Leiterseil im Bereich einer Auflage des Leiterseils auf einem Stützisolator darstellt.

Die erste Spirale kann eine Mittelbundspirale für einen Mittelbundisolator sein. Alternativ oder ergänzend kann die zweite Spirale eine Mittelbundspirale für einen Mittelbundisolator sein.

Mithilfe der ersten Spirale und/oder der zweiten Spirale kann eine formschlüssige Verbindung zu einem Stützisolator und eine kraft- bzw. reibschlüssige Verbindung zum Leiterseil bereitgestellt werden. Die formschlüssige Verbindung kann dadurch erreicht werden, dass die erste Spirale und/oder die zweite Spirale dazu eingerichtet ist, durch eine an einem Stützisolator vorgesehene Durchgangsöffnung hindurchgeführt zu werden, um einem Abheben des Leiterseils von dem Stützisolator entgegenzuwirken. Die kraftschlüssige bzw. reibschlüssige Verbindung kann dadurch erreicht werden, dass wenigstens eine der Spiralen ausgehend von der Durchgangsöffnung des Stützisolators jeweils um zwei an den Stützisolator angrenzende Abschnitte des Leiterseils gewickelt ist.

Nach einer Weiterbildung kann der Vogelschutz besonders einfach und kostengünstig dadurch bereitgestellt werden, dass die erste Spirale und/oder die zweite Spirale einen Kunststoff aufweisen, insbesondere einen faserverstärkten Kunststoff, um das Leiterseil zumindest abschnittsweise gegenüber der Umgebung zu isolieren. So kann ein leicht bauender und kompakter Vogelschutz erreicht werden, der insbesondere eine zuverlässige Befestigung eines Leiterseils an einem Mittelbundisolator oder Stützisolator ermöglicht.

Alternativ kann die erste Spirale und/oder die zweite Spirale aus einem Kunststoff bestehen, insbesondere aus einem faserverstärkten Kunststoff, um das Leiterseil zumindest abschnittsweise gegenüber der Umgebung zu isolieren. So kann ein leicht bauender und kompakter Vogelschutz erreicht werden, der insbesondere eine zuverlässige Befestigung eines Leiterseils an einem Mittelbundisolator oder Stützisolator ermöglicht.

Die Spiralen können beispielsweise Bänder aus glasfaserverstärktem Kunststoff sein, um einen kostengünstigen Vogelschutz und insbesondere eine kostengünstige Befestigung für ein Leiterseil an einem Stützisolator bereitzustellen.

Nach einer weiteren Ausgestaltung des Vogelschutzes ist vorgesehen, dass die abgewickelte Länge der ersten Spirale und/oder der zweiten Spirale 4 m oder mehr beträgt. Beispielsweise kann ein Leiterseil im Bereich eines Mittelbundisolators mithilfe der Spiralen über eine Leiterseillänge von 1390 mm oder mehr abgedeckt bzw. umfangsseitig umhüllt werden.

Alternativ oder ergänzend kann vorgesehen sein, dass die erste Spirale und/oder die zweite Spirale zum Ertragen einer Zugkraft von 18 kN/mm² oder mehr ausgelegt sind. Eine abgewickelte Spirale hält demnach einer Zugbelastung entlang ihrer Längsachse von 18 kN/mm² (Kilonewton pro Quadratmillimeter) oder mehr stand, wobei die Spirale in einem Zugversuch beispielsweise an ihren entgegengesetzten Enden eingespannt und auf Zug belastet wird.

Der Befestigungspunkt gemäß der Erfindung ist gekennzeichnet durch eine dritte Spirale, wobei die dritte Spirale dazu eingerichtet ist, das Leiterseil zumindest abschnittsweise zu umhüllen, wobei die dritte Spirale zumindest teilweise aus einem isolierenden Material hergestellt ist, um das Leiterseil zumindest abschnittsweise gegenüber einer Umgebung zu isolieren und wobei die dritte Spirale zum Umhüllen wenigstens eines Auflageabschnitts des Leiterseils im Bereich einer Auflage des Leiterseils auf einem Stützisolator vorgesehen ist. Durch ein Zusammenwirken der ersten, zweiten und dritten Spirale kann ein vollständiges Umhüllen eines Leiterseils im Bereich eines Mittelbundisolators erreicht werden, ohne den Selbstreinigungseffekt des Mittelbundisolators zu beeinträchtigen.

Die dritte Spirale kann eine geringere abgewickelte Länge aufweisen als die erste Spirale und/oder die zweite Spirale.

Die erste Spirale und zweite Spirale können eine identische abgewickelte Länge aufweisen.

Unter der "abgewickelten Länge" ist eine entlang einer zentralen Längsachse einer Spirale gemessene Länge zu verstehen, in einem ungekrümmten Zustand, z.B. in einer planen, gestreckten Auflage der Spirale auf einer ebenen Fläche. So kann eine Spirale in einem abgewickelten Zustand die Form eines linear ersteckten Seils oder Bands haben.

Eine kostengünstige Ausgestaltung des Vogelschutzes kann dadurch angegeben werden, dass die dritte Spirale einen Kunststoff, insbesondere einen faserverstärkten Kunststoff, aufweist, um das Leiterseil zumindest abschnittsweise gegenüber der Umgebung zu isolieren.

Alternativ kann die dritte Spirale aus einem Kunststoff, insbesondere einem faserverstärkten Kunststoff, bestehen, um das Leiterseil zumindest abschnittsweise gegenüber der Umgebung zu isolieren.

Es kann wenigstens eine Spirale vorgesehen sein, die einen im Wesentlichen kreisrunden Querschnitt aufweist.

Alternativ oder ergänzend kann wenigstens eine Spirale vorgesehen sein, die einen im Wesentlichen rechteckigen Querschnitt aufweist.

Alternativ oder ergänzend kann wenigstens eine Spirale vorgesehen sein, die bandförmig ist.

Alternativ oder ergänzend kann wenigstens eine Spirale vorgesehen sein, die einstückig gebildet ist. D.h. eine Spirale besteht beispielsweise aus einem einzigen Materialstrang.

Der Vogelschutz kann dreiteilig ausgeführt sein und aus einer ersten Spirale, einer zweiten Spirale und einer dritten Spirale bestehen, wobei die erste Spirale und die zweite Spirale zur Befestigung des Leiterseils an einem Stützisolator vorgesehen sind, und die dritte Spirale zum Umhüllen des Leiterseils im Bereich einer Auflage des Leiterseils auf dem Stützisolator vorgesehen ist.

Die Erfindung betrifft einen Befestigungspunkt für eine Freileitung eines Energieversorgungsnetzes, mit einem Leiterseil, mit einem Stützisolator zum Tragen des Leiterseils, mit einem Mast zum Tragen des Stützisolators und mit einem Vogelschutz, wobei der Vogelschutz die in Anspruch 1 genannten Merkmale aufweist.

So kann ein wartungsarmer, betriebssicherer, kostengünstiger und einfach zu montierender Vogelschutz an einem Befestigungspunkt bereitgestellt werden, der den Selbstreinigungseffekt des Stützisolators nicht beeinträchtigt.

Das Leiterseil ist in bekannter Weise zur Energieübertragung vorgesehen. Der Stützisolator kann eine nut- bzw. gabelförmige Auflage zum Tragen des Leiterseils aufweisen und kann aus Porzellan hergestellt sein. Der Mast kann ein Holz-Mast oder ein Stahlmast sein. Der Mast kann den Stützisolator an einem oberen Ende tragen.

Die erste Spirale umhüllt das Leiterseil in einem ersten Abschnitt vollständig und die zweite Spirale umhüllt das Leiterseil in einem zweiten Abschnitt vollständig , wobei zwischen dem ersten Abschnitt und dem zweiten Abschnitt ein Auflageabschnitt des Leiterseils gebildet ist, mit dem das Leiterseil auf dem Stützisolator aufliegt.

Alternativ oder ergänzend können die erste Spirale und/oder die zweite Spirale eine Befestigungsspirale zur Befestigung des Leiterseils an dem Stützisolator sein. Die erste Spirale und die zweite Spirale können die Funktion "Vogelschutz" und "Befestigungsspirale" vereinen. So kann die Anzahl der an einem Befestigungspunkt erforderlichen Bauteile reduziert werden.

Zur Befestigung des Leiterseils an dem Stützisolator sind die erste Spirale und die zweite Spirale durch eine Durchgangsöffnung des Stützisolators geführt.

Ein Stützisolator kann ein Mittelbundisolator sein, der eine Auflage zum Auflegen und Stützen eines Leiterseils und eine Durchgangsöffnung zum Durchführen einer oder mehrerer Mittelbundspiralen hat, insbesondere von zwei Mittelbundspiralen. Die erste Spirale und/oder die zweite Spirale können Mittelbundspiralen sein.

Nach der erfindungsgemäßen Ausgestaltung wird ein Befestigungspunkt angegeben, wobei die erste Spirale, die zweite Spirale und die dritte Spirale das Leiterseil im Bereich des Stützisolators vollständig umhüllen, wobei die erste Spirale eine Befestigungsspirale zur Befestigung des Leiterseils an dem Stützisolator ist, wobei die zweite Spirale eine Befestigungsspirale zur Befestigung des Leiterseils an dem Stützisolator ist, wobei die erste Spirale und die zweite Spirale durch eine Durchgangsöffnung des Stützisolators geführt sind, wobei eine kraftschlüssige und eine formschlüssige Verbindung zwischen dem Leiterseil und den Befestigungsspiralen gebildet ist und wobei die dritte Spirale den Auflageabschnitt des Leiterseils im Bereich einer Auflage des Leiterseils auf dem Stützisolator umhüllt.

Der Stützisolator kann ein Mittelbundisolator sein. Die Befestigungsspiralen können Mittelbundspiralen sein, die zur Zugentlastung des Leiterseils vorgesehen sind.

Die erste Spirale und die zweite Spirale können daher eine Kombination aus Vogelschutz und Befestigung des Leiterseils an dem Stützisolator, insbesondere Mittelbundisolator, darstellen. Die erste Spirale und die zweite Spirale können insbesondere dazu eingerichtet sein, eine Zugentlastung für das Leiterseil zu bilden. So können in kostengünstiger und einfacher Weise sowohl der Vogelschutz als auch eine Zugentlastung und eine Befestigung des Leiterseils an dem Stützisolator bereitgestellt werden.

Mithilfe der dritten Spirale kann kostengünstiger Weise auch im Bereich der Auflage des Leiterseil auf dem Stützisolator eine vollständige Umhüllung des Leiterseils stattfinden, ohne den Selbstreinigungseffekt des Stützisolators zu beeinträchtigen.

Die Spiralen können aus einem UV-beständigen Kunststoff hergestellt sein, insbesondere einem faserverstärkten Kunststoff. Die Spiralen können aus einem EPDM (Ethylen-Propylen-DienKautschuk), einem PBT (Polybutylenterephthalat) oder einem PPS (Polyphenylensulfid) hergestellt sein.

Die Spiralen können aus einem reibfesten Kunststoff hergestellt sein, insbesondere einem faserverstärkten Kunststoff.

Die UV-Beständigkeit und/oder die Reibfestigkeit kann durch eine Beschichtung des Kunststoffs erreicht werden.

Die Spiralen können eine Spannungsfestigkeit in einem Bereich von 20-35 kV aufweisen.

Es kann vorgesehen sein, dass der Vogelschutz den gesetzlichen Vorgaben nach §41 "Vogelschutz an Energiefreileitungen" nach dem Bundesnaturschutzgesetz und/oder der Vorschrift DIN VDE 0210-12.85 Abschnitt 8.10 genügt.

Nachfolgend wird die Erfindung anhand einer Ausführungsbeispiele darstellenden Zeichnung näher beschrieben es zeigen jeweils schematisch:
- Fig. 1: einen erfindungsgemäßen Vogelschutz für eine Freileitung;
- Fig. 2: einen erfindungsgemäßen Befestigungspunkt für eine Freileitung eines Energieversorgungsnetzes.

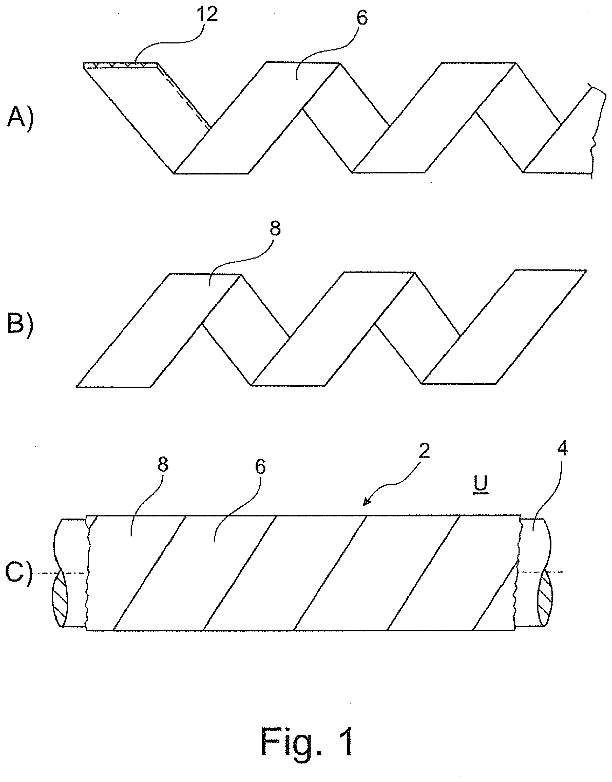

Fig. 1 zeigt einen Vogelschutz 2 für eine Freileitung mit einem Leiterseil 4. Der Vogelschutz 2 hat eine erste Spirale 6 und eine zweite Spirale 8. Die erste Spirale 6 und die zweite Spirale 8 sind dazu eingerichtet, ein Leiterseil 4 der Freileitung zumindest abschnittsweise zu umhüllen.

Die erste Spirale 6 und die zweite Spirale 8 sind zumindest teilweise aus einem isolierenden Material hergestellt, um das Leiterseil 4 zumindest abschnittsweise gegenüber einer Umgebung U zu isolieren. Vorliegend bestehen die erste Spirale 6 und die zweite Spirale 8 aus einem glasfaserverstärkten Kunststoff.

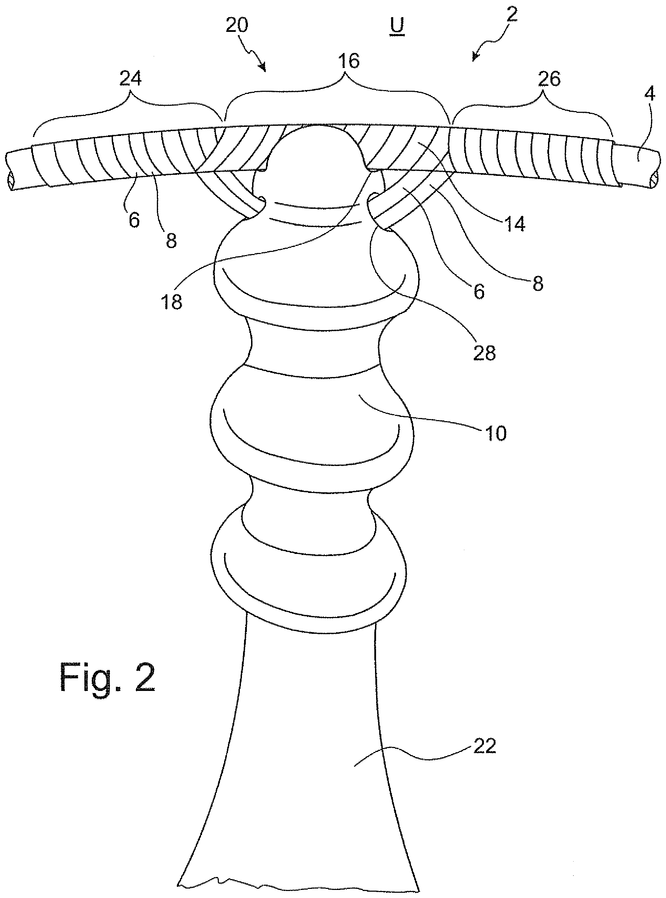

Die erste Spirale 6 ist eine Befestigungsspirale 6 und dient zur Befestigung des Leiterseils 4 an einem Stützisolator 10 (Fig. 2). Die zweite Spirale 8 ist eine Befestigungsspirale 8 und dient zur Befestigung des Leiterseils 4 an dem Stützisolator 10. Bei dem Stützisolator 10 handelt es sich um einen Mittelbundisolator aus Porzellan. Die erste Spirale 6 und die zweite Spirale 8 weisen eine abgewickelte Länge von 4 m auf.

Die erste Spirale 6 und die zweite Spirale 8 sind zum Ertragen einer Zugkraft von wenigstens 18 kN/mm² ausgelegt. Die erste Spirale 6 und die zweite Spirale 8 weisen einen rechteckigen Querschnitt 12 auf, wie in Fig. 1A exemplarisch dargestellt. Wie Fig. 1C zu entnehmen ist, ergänzen sich die erste Spirale 6 und die zweite Spirale 8 zu einer rohrförmigen Gestalt, sodass sie das Leiterseil 4 umfangsseitig vollständig und enganliegend umhüllen.

Die erste Spirale 6 und die zweite Spirale 8 sind vorliegend einstückig gebildet, das heißt, sie bestehen jeweils aus einem einzigen Materialstrang aus einem Vollmaterial.

Der Vogelschutz 2 weist zusätzlich eine dritte Spirale 14 auf (Fig. 2). Die dritte Spirale 14 ist dazu eingerichtet, das Leiterseil 4 zumindest abschnittsweise zu umhüllen. Die dritte Spirale 14 ist vorliegend ebenfalls aus einem glasfaserverstärkten Kunststoff hergestellt. Die dritte Spirale 14 ist zum Umhüllen wenigstens eines Auflageabschnitts 16 des Leiterseils 4 im Bereich einer Auflage 18 des Leiterseils 4 auf dem Stützisolator 10 vorgesehen (Fig. 2).

Fig. 2 zeigt einen Befestigungspunkt 20 für eine Freileitung eines Energieversorgungsnetzes, mit dem Leiterseil 4, dem Stützisolator 10 zum Tragen des Leiterseils 4, mit einem Mast 22 zum Tragen des Stützisolators 10 und mit dem Vogelschutz 2.

Zur Verbesserung der Übersichtlichkeit der Darstellung ist der Mast 22 lediglich in einem unterbrochenen Schnitt dargestellt, ebenso das Leiterseil 4. Der Vogelschutz 2 umhüllt das Leiterseil 4 vorliegend im Bereich des Stützisolators 10 entlang einer Länge des Leiterseils von ca. 1400 cm.

Der Vogelschutz 2 besteht vorliegend aus drei Teilen, der ersten Spirale 6, der zweiten Spirale 8 und der dritten Spirale 14. Die erste Spirale 6 und die zweite Spirale 8 umhüllen das Leiterseil 4 in einem ersten Abschnitt 24 vollständig. Die erste Spirale 6 und die zweite Spirale 8 umhüllen das Leiterseil in einem zweiten Abschnitt 26 vollständig.

Zwischen dem ersten Abschnitt 24 und dem zweiten Abschnitt 26 befindet sich der Auflageabschnitt 16 des Leiterseils 4, mit dem das Leiterseil 4 auf dem Stützisolator 10 im Bereich der Auflage 18 aufliegt. Die erste Spirale 6 und die zweite Spirale 8 sind als Befestigungsspiralen 6, 8 ausgeführt und dienen der Befestigung des Leiterseils 4 an dem Stützisolator 10. Die erste Spirale 6 und die zweite Spirale 8 sind hierzu durch eine Durchgangsöffnung 28 des Stützisolators 10 geführt.

Die erste Spirale 6, die zweite Spirale 8 und die dritte Spirale 14 sind vorliegend um das Leiterseil 4 gewickelt und umhüllen das Leiterseil 4 im Bereich des Stützisolators 10 vollständig, um einen Vogelschutz zuverlässig zu gewährleisten. Sowohl die erste Spirale 6 als auch die zweite Spirale 8 sind durch die Durchgangsöffnung 28 des Stützisolators 10 geführt.

Zwischen dem Leiterseil 4 und den Befestigungsspiralen 6, 8 ist eine kraftschlüssige bzw. reibschlüssige Verbindung gebildet. Die Befestigungsspiralen 6, 8 bilden eine Zugentlastung für das Leiterseil 4.

Die Befestigungsspiralen 6, 8 wirken zudem formschlüssig mit dem Stützisolator 10 zusammen, um ein Abheben des Leiterseils 4 von der Auflage 18 des Stützisolators 10 zu verhindern bzw. entgegenzuwirken. Um eine zuverlässige Umhüllung des Leiterseils 4 im Bereich des Stützisolators 10 zu gewährleisten, überlappen die Spiralen 6, 8, 14 vorliegend abschnittsweise.

### Bezugszeichenliste

2 Vogelschutz
4 Leiterseil
6 erste Spirale
8 zweite Spirale
10 Stützisolator
12 Querschnittsfläche
14 dritte Spirale
16 Auflageabschnitt des Leiterseils 4
18 Auflage des Stützisolators 10
20 Befestigungspunkt
22 Mast
24 erster Abschnitt
26 zweiter Abschnitt
28 Durchgangsöffnung
U Umgebung

## Patentansprüche

1. Befestigungspunkt für eine Freileitung eines Energieversorgungsnetzes,
- mit einem Leiterseil (4),
- mit einem Stützisolator (10) zum Tragen des
Leiterseils (4),wobei der Stützisolator eine Durchgangsöffnung aufweist,
- mit einem Mast (22) zum Tragen des Stützisolators (10) und
- mit einem Vogelschutz (2)für eine Freileitung,
- mit einer ersten Spirale (6) und
- mit einer zweiten Spirale (8),
- wobei die erste Spirale (6) und die zweite Spirale (8) dazu eingerichtet sind, ein Leiterseil (4) der Freileitung zumindest abschnittsweise zu umhüllen, und
- wobei die erste Spirale (6) und die zweite Spirale (8) zumindest teilweise aus einem isolierenden Material hergestellt sind, um das Leiterseil (4) zumindest abschnittsweise gegenüber einer Umgebung (U) zu isolieren, wobei zwischen einem ersten Abschnitt (24) und einem zweiten Abschnitt (26) ein Auflageabschnitt (16) des Leiterseils (4) gebildet ist, mit dem das Leiterseil (4) auf dem Stützisolator (10) aufliegt, wobei die erste Spirale (6) eine Befestigungsspirale zur Befestigung des Leiterseils (4) an dem Stützisolator (10) ist,
- wobei die zweite Spirale (8) eine Befestigungsspirale zur Befestigung des Leiterseils (4) an dem Stützisolator (10) ist,
- wobei die erste Spirale (6) und die zweite Spirale (8) durch die Durchgangsöffnung (28) des Stützisolators (10) geführt sind;
- wobei eine kraftschlüssige Verbindung zwischen dem Leiterseil (4) und den Befestigungsspiralen (6, 8) gebildet ist, **gekennzeichnet durch**
- eine dritten Spirale (14),
- wobei die dritte Spirale (14) dazu eingerichtet ist, das Leiterseil (4) zumindest abschnittsweise zu umhüllen,
- wobei die dritte Spirale (14) zumindest teilweise aus einem isolierenden Material hergestellt ist, um das Leiterseil (4) zumindest abschnittsweise gegenüber einer Umgebung (U) zu isolieren und
- wobei die dritte Spirale (14) zum Umhüllen wenigstens eines Auflageabschnitts (16) des Leiterseils (4) im Bereich einer Auflage (18) des Leiterseils (4) auf einem Stützisolator (10) vorgesehen ist, wobei
- die erste Spirale (6) und die zweite Spirale (8) das Leiterseil (4) in dem ersten Abschnitt und in dem zweiten Abschnitt (26) vollständig umhüllen,
wobei die erste Spirale (6), die zweite Spirale (8) und die dritte Spirale (14) das Leiterseil (4) im Bereich des Stützisolators (10) vollständig umhüllen,
- und wobei die dritte Spirale (14) den Auflageabschnitt (16) des Leiterseils (4) im Bereich einer Auflage (18) des Leiterseils (4) auf dem Stützisolator (10) vollständig umhüllt.

2. Befestigungspunkt nach Anspruch 1, **dadurch gekennzeichnet,**
- **dass** die erste Spirale (6) und/oder die zweite Spirale (8) einen Kunststoff aufweisen, insbesondere einen faserverstärkten Kunststoff, um das Leiterseil (4) zumindest abschnittsweise gegenüber der Umgebung (U) zu isolieren,
oder
- **dass** die erste Spirale (6) und/oder die zweite Spirale (8) aus einem Kunststoff bestehen, insbesondere aus einem faserverstärkten Kunststoff, um das Leiterseil (4) zumindest abschnittsweise gegenüber der Umgebung (U) zu isolieren.

3. Befestigungspunkt nach einem der voranstehenden Ansprüche, **dadurch gekennzeichnet,**
- **dass** die abgewickelte Länge der ersten Spirale (6) und/oder der zweiten Spirale (8) 4 m oder mehr beträgt,
und/oder
- **dass** die erste Spirale (6) und/oder die zweite Spirale (8) zum Ertragen einer Zugkraft von 18 kN/mm2 oder mehr ausgelegt sind.

4. Befestigungspunkt nach einem der voranstehenden Ansprüche, **dadurch gekennzeichnet, dass**
- dass die dritte Spirale (14) einen Kunststoff, insbesondere einen faserverstärkten Kunststoff, aufweist, um das Leiterseil (4) zumindest abschnittsweise gegenüber der Umgebung (U) zu isolieren,
oder
- dass die dritte Spirale (14) aus einem Kunststoff, insbesondere einem faserverstärkten Kunststoff, besteht, um das Leiterseil (4) zumindest abschnittsweise gegenüber der Umgebung (U) zu isolieren.

5. Befestigungspunkt nach einem der voranstehenden Ansprüche, **dadurch gekennzeichnet, dass**
- wenigstens eine Spirale (6, 8, 14) vorgesehen ist, die einen im Wesentlichen kreisrunden Querschnitt aufweist,
und/oder
- wenigstens eine Spirale (6, 8, 14) vorgesehen ist, die einen im Wesentlichen rechteckigen Querschnitt aufweist,
und/oder
- wenigstens eine Spirale (6, 8, 14) vorgesehen ist, die bandförmig ist,
und/oder
- wenigstens eine Spirale (6, 8 14) vorgesehen ist, die einstückig gebildet ist.

## Claims

1. Fastening point for an overhead line of a power grid comprising:
- a conductor rope (4),
- a post insulator (10) for supporting the conductor rope (4), the post insulator comprising a lead through,
- a pole (22) for carrying the post insulator (10) and
- a bird protector (2) for an overhead line,
- a first spiral (6) and
- a second spiral (8),
- the first spiral (6) and the second spiral (8) being configured to envelop a conductor rope (4) of the overhead line at least in sections, and
- the first and second spirals (6,8) at least partly being manufactured from an insulating material for insulating the conductor rope (4) vis a vis an environment (U) at least in sections, a support section (16) of the conductor rope (4) being formed between a first section (24) and a second section (26) with which the conductor rope (4) rests on the post insulator (10),
- the first spiral (6) being an attachment spiral for attaching the conductor rope (4) to the post insulator (10),
- the second spiral (8) being an attachment spiral for attaching the conductor rope (4) to the post insulator (10),
- the first spiral (6) and the second spiral (8) being fed through the lead through (28) of the post insulator (10),
- the conductor rope (4) and the attachment spirals (6,8) being friction-locked to each other,
**characterized by**
- a third spiral (14),
- the third spiral (14) being configured to envelop the conductor rope (4) at least in sections,
- the third spiral (14) at least partially being manufactured from an insulating material in order to insulate the conductor rope (4) vis a vis an environment (U), at least partially,
- the third spiral (14) being configured to at least envelop a support section (16) of the conductor rope (4) at least in a rest area (18) of the post insulator (10),
- wherein the first spiral (6) and the second spiral (8) envelop the first section (24) and the second section (26) of the conductor rope (4) completely,
- wherein the first spiral (6) the second spiral (8) and the third spiral envelop the conductor rope (4) completely in the region of the post insulator (10), and
- wherein the third spiral (14) envelops the support section (16) of the conductor rope (4) completely in the rest area (18) of the post insulator (10).

2. Fastening point according to claim 1, **characterized in that**
- the first spiral (6) and/or the second spiral (8) comprise a plastic material, in particular a fibre reinforced plastic material for at least partially insulating the conductor rope (4) vis a vis the environment (U) or **in that**
- the first spiral (6) and/or the second spiral (8) consist of a plastic material, in particular of a fibre reinforced plastic material for at least partially insulating the conductor rope (4) vis a vis the environment (U).

3. Fastening point according to anyone of the preceding claims, **characterized in that**
- the uncoiled length of the first spiral (6) and/or the second spiral (8) amounts to 4m or more
and/or
- **in that** the first spiral (6) and the second spiral (8) are designed for bearing a tensile force of 18 kN/mm² or more.

4. Fastening point according to anyone of the preceding claims, **characterized in that**
- the third spiral (14) comprises a plastic material, in particular a fibre reinforced plastic material for at least partially insulating the conductor rope (4) vis a vis the environment (U) or **in that**
- the third spiral (14) consists of a plastic material, in particular of a fibre reinforced plastic material for at least partially insulating the conductor rope (4) vis a vis the environment (U).

5. Fastening point according to anyone of the preceding claims, **characterized in that**
- at least one spiral (6,8,14) is provided which has a generally circular cross section, and/or
- at least one spiral (6,8,14) is provided which has a generally rectangular cross section, and/or
- at least one spiral (6,8,14) is provided which is ribbon like, and/or
- at least one spiral (6,8,14) is provided which has a single piece design.

## Revendications

1. Point de fixation pour une ligne aérienne d'un réseau électrique comprenant :
- un câble conducteur (4),
- un isolateur rigide à socle (10) pour supporter le câble conducteur (4), l'isolateur rigide à socle comprenant une traversée,
- un poteau (22) pour porter l'isolateur rigide à socle (10) et
- un protecteur d'oiseaux (2) pour une ligne aérienne,
- une première spirale (6) et
- une deuxième spirale (8),
- la première spirale (6) et la deuxième spirale (8) étant configurées pour envelopper un câble conducteur (4) de la ligne aérienne au moins dans des sections, et
- les première et deuxième spirales (6, 8) étant au moins en partie fabriquées à partir d'un matériau isolant pour isoler le câble conducteur (4) vis-à-vis d'un environnement (U) au moins dans des sections, une section de support (16) du câble conducteur (4) étant formée entre une première section (24) et une seconde section (26) avec lesquelles le câble conducteur (4) appuie sur l'isolateur rigide à socle (10),
- la première spirale (6) étant une spirale d'attache pour attacher le câble conducteur (4) à l'isolateur rigide à socle (10),
- la deuxième spirale (8) étant une spirale d'attache pour attacher le câble conducteur (4) à l'isolateur rigide à socle (10),
- la première spirale (6) et la deuxième spirale (8) étant amenées à travers la traversée (28) de l'isolateur rigide à socle (10),
- le câble conducteur (4) et les spirales d'attache (6, 8) étant serrés par friction les uns aux autres,
**caractérisé par**
- une troisième spirale (14),
- la troisième spirale (14) étant configurée pour envelopper le câble conducteur (4) au moins dans des sections,
- la troisième spirale (14) étant au moins partiellement fabriquée à partir d'un matériau isolant afin d'isoler le câble conducteur (4) vis-à-vis d'un environnement (U), au moins partiellement,
- la troisième spirale (14) étant configurée pour envelopper au moins une section de support (16) du câble conducteur (4) dans une zone d'appui (18) du câble conducteur sur l'isolateur rigide à socle (10),
- dans lequel la première spirale (6) et la deuxième spirale (8) enveloppent totalement la première section (24) et la seconde section (26) du câble conducteur (4),
- dans lequel la première spirale (6), la deuxième spirale (8) et la troisième spirale (14) enveloppent totalement le câble conducteur (4) dans la région de l'isolateur rigide à socle (10), et
- dans lequel la troisième spirale (14) enveloppe totalement la section de support (16) du câble conducteur (4) dans une zone d'appui (18) du câble conducteur (4) sur l'isolateur rigide à socle (10).

2. Point de fixation selon la revendication 1, **caractérisé en ce que**
- la première spirale (6) et/ou la deuxième spirale (8) comprennent un matériau plastique, en particulier un matériau plastique renforcé de fibres pour isoler au moins partiellement le câble conducteur (4) vis-à-vis de l'environnement (U) ou **en ce que**
- la première spirale (6) et/ou la deuxième spirale (8) sont constituées d'un matériau plastique, en particulier d'un matériau plastique renforcé de fibres pour isoler au moins partiellement le câble conducteur (4) vis-à-vis de l'environnement (U).

3. Point de fixation selon l'une quelconque des revendications précédentes, **caractérisé en ce que**
- la longueur délovée de la première spirale (6) et/ou de la deuxième spirale (8) s'élève à 4 m ou plus
et/ou
- **en ce que** la première spirale (6) et la deuxième spirale (8) sont conçues pour résister à une force de traction de 18 kN/mm² ou plus.

4. Point de fixation selon l'une quelconque des revendications précédentes, **caractérisé en ce que**
- la troisième spirale (14) comprend un matériau plastique, en particulier un matériau plastique renforcé de fibres pour isoler au moins partiellement le câble conducteur (4) vis-à-vis de l'environnement (U) ou **en ce que**
- la troisième spirale (14) est constituée d'un matériau plastique, en particulier d'un matériau plastique renforcé de fibres pour isoler au moins partiellement le câble conducteur (4) vis-à-vis de l'environnement (U).

5. Point de fixation selon l'une quelconque des revendications précédentes, **caractérisé en ce que**
- au moins une spirale (6, 8, 14) ayant une section en coupe généralement circulaire est prévue, et/ou
- au moins une spirale (6, 8, 14) ayant une section en coupe généralement rectangulaire est prévue, et/ou
- au moins une spirale (6, 8, 14) de type ruban est prévue, et/ou
- au moins une spirale (6, 8, 14) ayant une conception monobloc est prévue.
